# EUROPÄISCHE PATENTSCHRIFT

(11) **EP 1 033 889 B1**
(45) Veröffentlichungstag und Bekanntmachung des Hinweises auf die Patenterteilung: **22.09.2004**
(21) Anmeldenummer: 00440062.8
(22) Anmeldetag: 02.03.2000
(51) Int. Cl.: H04Q 3/72, H04Q 3/00, H04M 3/42

(54) **Übertragung der Rufnummer des rufenden Teilnehmers bei Anrufen vom privaten ins öffentliche Telekommunikationsnetz**
Transmission of the calling party number for calls from the private to the public telecommunication network
Transmission du numéro d'appelant pour appels issus d'un réseau de télécommunication privé vers un réseau public

(30) Priorität: 03.03.1999 DE 19909110
(43) Veröffentlichungstag der Anmeldung: 06.09.2000
(73) Patentinhaber: ALCATEL, 75008 Paris (FR)
(72) Erfinder: Lautenschlager, Wolfgang, 71287 Weissach-Flacht (DE); Weik, Hartmut, 70195 Stuttgart (DE)
(74) Vertreter: Rausch, Gabriele, Dr.

(56) Entgegenhaltungen:
- WO-A-96/33583
- KISS-SURANYI A: "DER GUNSTIGSTE WEG ZUM ZIEL MIT DEN VIELFALTIGEN LEISTUNGSMERKMALEN DER NEUEN VERSION VON HICOM 300 LASSEN SICH PRIVATE NETZE NOCH EFFIZIENTER UND WIRTSCHAFTLICHER NUTZEN" TELCOM REPORT, SIEMENS AG. MUNCHEN, DE, Bd. 18, Nr. 1, 1995, Seiten 42-43, XP000491919 ISSN: 0344-4724
- BANDOW ET AL: "Zeichengabesysteme - 2. Auflage" , PAGE(S) 72-79 XP002118116 * Seite 74, linke Spalte, letzter Absatz - Seite 74, rechte Spalte, Absatz 1 *
- BANDOW ET AL: "Zeichengabesysteme - 2. Auflage" , ZEICHENGABESYSTEME, LTU VERTRIEBSGESELLSCHAFT MBH, BREMEN, DE, PAGE(S) 212-232 XP002104153 * Abschnitt 6.10 - 6.10.5.1 *

## Beschreibung

Die Erfindung betrifft ein Verfahren zur Bereitstellung der Rufnummer des rufenden Teilnehmers in Verbindungsanforderungen nach dem Oberbegriff von Anspruch 1, und eine Diensteinheit zur Unterstützung der Bereitstellung der Rufnummer des rufenden Teilnehmers in Verbindungsanforderungen nach dem Oberbegriff von Anspruch 9.

Die Erfindung geht von dem in einem ISDN Kommunikationssystem (ISDN = Integrated Services Digital Network) bereitgestellten Leistungsmerkmal "Übermittlung der Rufnummer des rufenden Teilnehmers" aus, das beispielsweise in der Offenlegungsschrift DE 41 01 885 A1 beschrieben ist:

In der zum Aufbau einer Verbindung in Richtung des gerufenen Teilnehmers durch das ISDN Kommunikationssystem geleiteten Verbindungsanforderung wird von dem ISDN Kommunikationssystem die Rufnummer des rufenden Teilnehmers zum Endgerät des gerufenen Teilnehmers transportiert. Dort wird die Rufnummer des rufenden Teilnehmers dann dem gerufenen Teilnehmer angezeigt oder diese Information wird als Eingangsinformation für CSTA Anwendungen (CSTA = Computer Supported Telecommunication Application) verwendet. Diese Information kann weiter auch als Grundlage für einen Rückruf des gerufen Teilnehmers dienen.

Dokument Bandow et al: "Zeichengcibesystem - 2. Auflage Seiten 72-79 XP002118116" beschreibt Dienstmerkmale zu Übermittlung des Rufnummer des rufenden Teilnehmers zum gerufenen Teilnehmer und die entsprechenden Prozeduren in den verschiedenen betroffenen vermittlungsstellen. Insbesondere kann ein Teilnehmer beim Netzbetreiber beantragen, dass die Überprüfung des rufenden Teilnehmers nicht durchgeführt wird.

Es ist somit von besonderer Bedeutung, daß diese Information korrekt zum Endgerät des gerufenen Teilnehmers übermittelt wird. Dies ist jedoch nicht immer der Fall, wenn der rufende Teilnehmer einem privaten Kommunikationsnetz zugeordnet ist.

Der Erfindung liegt nun die Aufgabe zugrunde, die Qualität der Übermittlung der Rufnummer des rufenden Teilnehmers in einer Verbindungsanforderung für den Fall zu verbessern, in dem der rufende Teilnehmer über ein privates Kommunikationsnetz an das öffentliche Kommunikationsnetz angeschlossen ist.

Diese Aufgabe wird gelöst durch ein Verfahren zur Bereitstellung der Rufnummer des rufenden Teilnehmers in Verbindungsanforderungen nach der Lehre von Anspruch 1, eine Diensteinheit zur Unterstützung der Bereitstellung der Rufnummer des rufenden Teilnehmers in Verbindungsanforderungen nach der Lehre von Anspruch 9, und ein privates Kommunikationsnetz nach der Lehre von Anspruch 10.

Der Erfindung liegt hierbei der Gedanke zugrunde, daß die Rufnummer des rufenden Teilnehmers nicht korrekt in der Verbindungsanforderung bereitgestellt wird, wenn die Verbindungsanforderung in einem Ortsnetzbereich von dem privaten Kommunikationsnetzes in das öffentliche Kommunikationsnetz geleitet wird, der nicht dem dem rufenden Teilnehmer zugeordneten Ortsnetzbereich entspricht. Eine Diensteinheit des öffentlichen Kommunikationsnetzes detektiert solche Verbindungsanforderung und stellt den Eintrag der korrekten Rufnummer des rufenden Teilnehmers in der Verbindungsanforderung sicher.

Der Vorteil der Erfindung besteht darin, daß ISDN und CSTA Leistungsmerkmale, die auf der Information über den rufenden Teilnehmer aufbauen, auch für Teilnehmer von privaten Kommunikationsnetzen korrekt funktionieren. Dieser Dienst kann weiter von einem Betreiber eines öffentlichen Kommunikationsnetz als Zusatzdienst größeren Kunden auf einfache Weise zusätzlich angeboten werden.

Vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Kommunikationssystems mit einem öffentlichen Kommunikationsnetz und einem privaten Kommunikationsnetz
- Fig. 2: zeigt eine funktionelle Darstellung der Kommunikationssystems nach Fig. 1 für ein erstes Ausführungsbeispiel.
- Fig. 3a: zeigt eine funktionelle Darstellung eines Ausschnitts aus dem Kommunikationssystem nach Fig. 1 für ein zweites Ausführungsbeispiel.
- Fig. 3b: zeigt eine funktionelle Darstellung eines Ausschnitts aus dem Kommunikationssystem nach Fig. 1 für ein drittes Ausführungsbeispiel.
- Fig. 3c: zeigt eine funktionelle Darstellung eines Ausschnitts aus dem Kommunikationssystem nach Fig. 1 für ein viertes Ausführungsbeispiel.

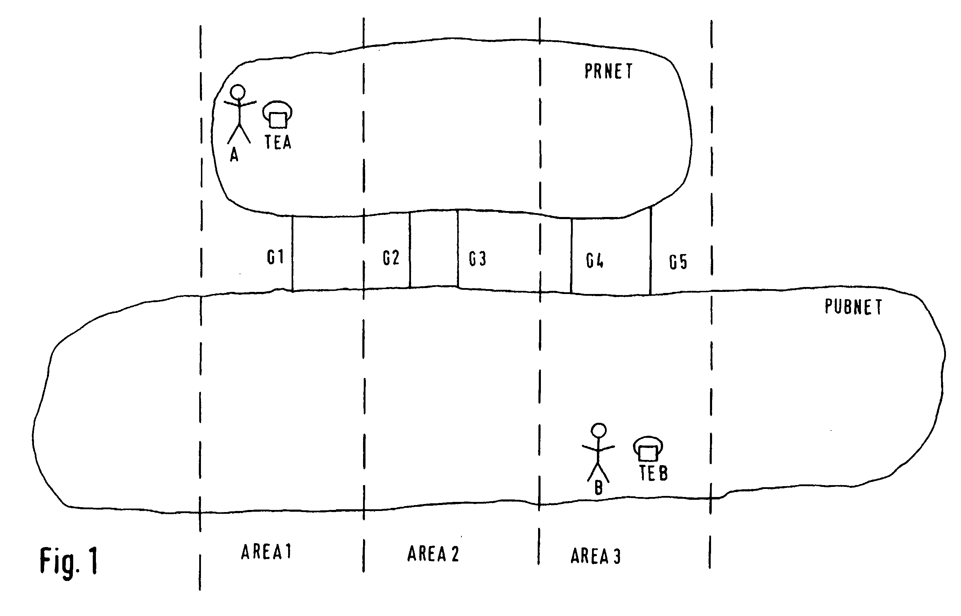

Fig. 1 zeigt ein Kommunikationssystem mit zwei Kommunikationsnetzen PUBNET und PRNET, die über mehrere Netzübergänge G1 bis G5 miteinander verbunden sind.

Die Kommunikationsnetze PUBNET und PRNET stellen Fernsprechnetze, beispielsweise ISDN Fernsprechnetze (ISDN = Integrated Services Digital Network) dar. Es ist auch möglich, daß die Kommunikationsnetze PUBNET und PRNET zusätzlich der Bild- und/oder Datenübertragung dienen. Weiter ist es möglich, daß Endgeräte mit den Kommunikationsnetzen PUBNET und PRNET über eine Luftschnittstelle, beispielsweise nach dem DECT Standard (DECT = Digital European Cordless Telephony) oder dem GSM Standard (GSM = Global System for Mobility) verbunden sind.

Das Kommunikationsnetz PUBNET ist ein öffentliches Kommunikationsnetz. Es wird von einer Vielzahl miteinander verbundenen Vermittlungsstellen gebildet, die ihrerseits mit einer Vielzahl von Endgeräten verbunden sind. Von diesen Endgeräten ist in Fig. 1 beispielhaft ein Endgerät TEB gezeigt, das einem Teilnehmer B zugeordnet ist. Es ist hierbei möglich, daß das Kommunikationsnetzen PUBNET von mehreren unterschiedlichen Netzbetreibern zugeordneten Teil-Kommunikationsnetzen gebildet wird. Teil-Kommunikationsnetze können hierbei auch Mobilfunknetze sein, beispielsweise nach dem GSM Standard (GSM = Global System for Mobility).

Das Kommunikationsnetz PRNET ist ein privates Kommunikationsnetz, beispielsweise das private Kommunikationsnetz einer Firma. Es wird von ein oder mehreren miteinander verbundenen Nebenstellenvermittlungen gebildet, an die die dem privaten Kommunikationsnetz zugeordneten Teilnehmer, beispielsweise die Angestellten der Firma, über ihre jeweiligen Endgeräte verbunden sind. Von diesen Endgeräten ist in Fig. 1 beispielhaft ein Endgerät TEA gezeigt, das einem Teilnehmer A zugeordnet ist. Das private Kommunikationsnetz PRNET zeichnet sich hierbei dadurch aus, daß die Endgeräte des privaten Kommunikationsnetzes innerhalb des privaten Kommunikationsnetzes gemäß eines privaten Nummerierungsschemas adressiert werden. Die Netzübergänge G1 bis G5, die jeweils ein oder mehrere Amtsleitungen umfassen, ermöglichen hierbei die Kommunikation zwischen Teilnehmern des privaten Kommunikationsnetzes PRNET und Teilnehmern des öffentlichen Kommunikationsnetzes PUBNET.

Wenn das private Kommunikationsnetz PRNET zwei oder mehr miteinander verbundene Nebenstellenvermittlungen umfaßt, ist es auch möglich, daß diese Nebenstellenvermittlungen über Standleitungen des öffentlichen Kommunikationsnetze PUBNET miteinander verbunden sind. Weiter ist es möglich, daß die Nebenstellenanlagen über Wählleitungen des öffentlichen Kommunikationsnetzes PUBNET miteinander verbunden sind und somit das private Kommunikationsnetze PRNET ein virtuelles privates Kommunikationsnetz darstellt. Auch einzelne Endgeräte können hierbei über Wählleitungen des öffentlichen Netzes PUBNET und mittels Unterstützung eines Dienstes des öffentlichen Netzes PUBNET in solch ein virtuelles privates Netz integriert werden.

Das öffentliche Kommunikationsnetz PUBNET ist bezüglich des Nummerierungsschemas in eine Vielzahl verschiedener, geographisch orientierter Ortsnetzbereiche geteilt, von denen in Fig. 1 beispielhaft drei Ortsnetzbereiche AREA1 bis AREA3 gezeigt sind. die Ortsnetzbereiche stellen eigenständige Nummerierungsbereiche dar. Zur Anwahl eines Teilnehmer eines anderen Ortsnetzbereiches ist die Ortsnetzbereichskennung desjenigen Ortsnetzbereiches, dem das Endgerät des Teilnehmers zugeordnet ist, und sodann die Teilnehmerrufnummer des Teilnehmers zu wählen, die dem Teilnehmer innerhalb des Ortsnetzbereiches zugeordnet ist. Auch die Endgeräte des privaten Kommunikationsnetzes PRNET sind diesem Nummerierungsschema unterworfen. Je nach geographischem Standort sind die Endgeräte des privaten Kommunikationsnetzes für Anrufe aus dem öffentlichen Kommunikationsnetz einem der Netzübergänge G1 bis G5 zugeordnet und somit jeweils einem der Ortsnetzbereiche AREA1 bis AREA3 zugeordnet. Zur Anwahl eines Teilnehmers des privaten Kommunikationsnetzes PRNET ist somit die Ortsnetzbereichskennung des ihm zugeordneten Netzübergangs, die Teilnehmeranschlußnummer des Netzübergangs und die Nebenstellennummer des Teilnehmers zu wählen. Der dem Teilnehmer zugeordnete Netzübergang wird hierbei vorteilhafterweise durch die dem Teilnehmer zugeordnete Nebenstellenanlage bestimmt, so daß dann den Teilnehmern des privaten Kommunikationsnetzes PRNET jeweils die Ortsbereichkennung der ihnen jeweils zugeordneten Nebenstellenanlage oder Nebenstellenvermittlung zugeordnet ist.

Das private Kommunikationsnetz PRNET ist teilweise dem Ortsnetzbereich AREA1, dem Ortsnetzbereich AREA2 und dem Ortsnetzbereich AREA3 zugeordnet.

Das Endgerät TEA des privaten Kommunikationsnetzes PRNET ist dem Ortsnetzbereich AREA1 und das Endgerät TEB des öffentlichen Kommunikationsnetzes PRNET ist dem Ortsnetzbereich AREA3 zugeordnet. Wählt nun der Teilnehmer A des privaten Kommunikationsnetzes den Teilnehmer B des öffentlichen Kommunikationsnetzes an, so wird zum Aufbau der Verbindung eine entsprechende Verbindungsanforderung über eine der Netzübergänge G1 bis G5 in das öffentliche Kommunikationsnetz PUBNET geleitet. Neben der Rufnummer des gerufenen Teilnehmers (gewählte Rufnummer) ist in der Verbindungsanforderung hierbei auch die Nebenstellenrufnummer des rufenden Teilnehmers enthalten.

In der von dem privaten Kommunikationsnetz PRNET in das öffentliche Kommunikationsnetz PUBNET geleiteten Verbindungsanforderung wird der Rufnummer des rufenden Teilnehmers vom öffentlichen Kommunikationsnetz PUBNET automatische die Ortsnetzbereichskennung desjenigen Ortsnetzbereiches zugeordnet, in dem die Verbindungsanforderung in das öffentliche Kommunikationsnetz PUBNET geleitet worden ist. Diese Zuordnung und der Eintrag der Ortsnetzbereichskennung in die Verbindungsanforderung erfolgt beim Übergang der Verbindungsanforderung in einen anderen Ortsnetzbereich des öffentlichen Kommunikationsnetzes PUBNET oder beim Eintritt der Verbindungsanforderung in das öffentlichen Kommunikationsnetz PUBNET.

Wenn nun die Verbindungsanforderung in einem Ortsnetzbereich von dem privaten Kommunikationsnetzes in das öffentliche Kommunikationsnetz geleitet wird, der nicht dem dem rufenden Teilnehmer zugeordneten Ortsnetzbereich entspricht, wird eine Diensteinheit des öffentlichen Kommunikationsnetzes für diese von dem privaten Kommunikationsnetz in das öffentliche Kommunikationsnetz geleitete Verbindungsanforderung getriggert. Dies ist beispielsweise der Fall, wenn die Verbindungsanforderung nicht über den Netzübergang G1, sondern über einen der Netzübergänge G2 bis G5 in das öffentliche Kommunikationsnetz PUBNET geleitet wird, weil beispielsweise der Netzübergang G1 überlastet ist oder es aus Gebührengesichtspunkten günstiger ist, die Verbindungsanforderung erst im Ortsnetzbereich AREA3 in das öffentliche Kommunikationsnetz PUBNET zu leiten.

Wenn die Diensteinheit für eine solche Verbindungsanforderung getriggert wird, ermittelt die Diensteinheit dann die dem rufenden Teilnehmer zugeordnete Ortsnetzbereichskennung, beispielsweise die Kennung des Ortsnetzbereiches AREA1, und stellt den Eintrag dieser Kennung als Ortsnetzbereichskennung des rufenden Teilnehmers in die Verbindungsanforderung sicher.

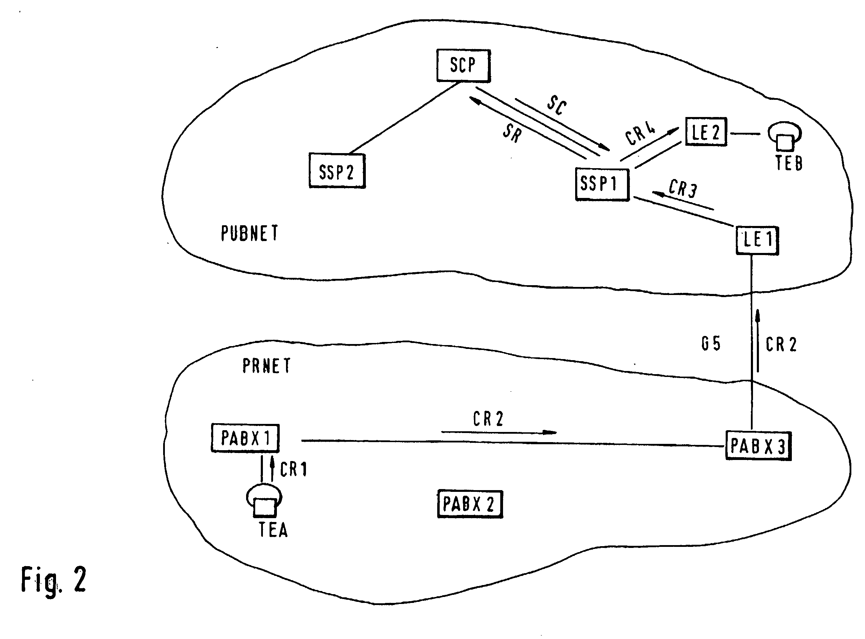

Anhand von Fig. 2 wird nun ein erstes Ausführungsbeispiel der Erfindung verdeutlicht.

Fig. 2 zeigt die Kommunikationsnetze PUBNET und PRNET mit den Endgeräten TEB und TEA, sowie den Netzübergang G5.

Das private Kommunikationsnetz PRNET weist im Ausführungsbeispiel drei Nebenstellenvermittlungen PABX1 bis PABX3 auf. Das Endgerät TEA ist mit der Nebenstellenvermittlung PABX1 und der Netzübergang G5 mit der Nebenstellenvermittlung PABX3 verbunden. Jede der Nebenstellenvermittlungen PABX1 bis PABX3 versorgt einen anderen Standort einer Firma, wobei jeder Standort einem anderen Ortsnetzbereich zugeordnet ist.

Das öffentliche Kommunikationsnetz PUBNET weist eine Vielzahl von Vermittlungsstellen auf, von denen in Fig. 2 beispielhaft zwei Teilnehmervermittlungsstellen LE1 und LE2 und zwei Dienstvermittlungsstellen SSP1 und SSP2 gezeigt sind. Weiter weist das Kommunikationsnetze PUBNET eine Dienststeuereinheit SCP auf, die mit den Dienstvermittlungsstellen SSP1 und SSP2 verbunden ist.

Die Teilnehmervermittlungsstelle LE2 stellt die dem Endgerät TEB zugeordnete Teilnehmervermittlungsstelle dar, das Endgerät TEB ist somit mit dieser Vermittlungsstelle verbunden. Die Teilnehmervermittlungsstelle LE1 ist mit der Nebenstellenvermittlung PABX3 verbunden und stellt der Nebenstellenvermittung PABX3 einen Netzzugang in das öffentliche Kommunikationsnetz PUBNET zur Verfügung.

Die Dienstvermittlungsstellen SSP1 und SSP2 stellen Dienstvermittlungsfunktionen gemäß der IN Architektur (IN = Intelligent Network) bereit. Bei Auftreten eines Triggerereignisses, beispielsweise daß eine bestimmten Zielrufnummer in einer von der Dienstvermittlungsstelle vermittelten Verbindungsanforderung eingetragen ist, senden sie eine Dienstanforderungsnachricht mit einer entsprechenden Dienstekennung über das Signalisierungsnetz an die Dienststeuereinheit SCP. In der Dienststeuereinheit SCP wird sodann eine der Dienstekennung zugeordnete Dienstelogik aktiviert, die einen Dienst für die Verbindungsanforderung erbringt. Bei der Diensterbringung steuert hierbei die Dienststeuereinheit mittels Steuernachrichten die weitere Behandlung der Verbindungsanforderung durch die Dienstvermittlungsstellen SSP1 und SSP2. Es ist hierbei auch möglich, daß die Dienststeuereinheit SCP keine von einer Dienstvermittlungsstellen SSP1 und SSP2 abgesetzte Einheit darstellt, sondern von einem auf der Rechnerplattform einer Dienstvermittlungsstelle ablaufenden Programm-Modul gebildet wird oder eine Diensteinheit darstellt, die Teil der Steuerung der Dienstvermittlungsstelle SSP1 oder der Teilnehmervermittlungsstelle LE1 ist.

Der Teilnehmer A des privaten Kommunikationsnetzes PRNET fordert durch Wahl der entsprechenden Rufnummer, die das Senden einer Verbindungsanforderung CR1 an die Nebenstellenvermittlung PABX1 initiiert, den Aufbau einer Verbindung zum Teilnehmer B des öffentlichen Kommunikationsnetzes PUBNET an. Eine Steuereinheit der Steuerung der Nebenstellenvermittlung PABX1 erbringt nun für die angeforderte Verbindung eine sog. "least cost routing" Funktion:

Sie ermittelt aus der gewählten Rufnummer den Ziel-Ortsnetzbereich des Rufes und wählt mittels dieser Daten denjenigen der Netzübergänge G1 bis G5 ins öffentliche Kommunikationsnetz PUBNET aus, der am günstigsten zum Ziel-Ortsnetzbereich liegt. Die Verbindung wird somit soweit wie möglich im privaten Netz geführt und es wird derjenige Netzübergang ausgewählt, über den die geringsten Verbindungsgebühren im öffentlichen Kommunikationsnetz PUBNET anfallen.

Wenn der so ausgewählt Netzübergang nicht in dem dem rufenden Teilnehmer zugeordneten Ortsnetzbereich liegt, fügt die Steuereinheit der Nebenstellenvermittlung PABX1 weiter eine Dienstekennung in die zum Aufbau der Verbindung über den ausgewählte Netzübergang in das öffentliche Kommunikationsnetz PUBNET geleitete Verbindungsanforderung ein. Die Dienstekennung wird hierbei beispielsweise der Rufnummer des gerufenen Teilnehmers vorangestellt.

Eine so umgestaltete Verbindungsanforderung CR2 wird nun durch das private Kommunikationsnetz PRNET zu der Nebenstellenvermittlung PABX3 und von dieser über den Netzübergang G5 zur Teilnehmervermittlung LE3 gesendet. Die Teilnehmervermittlung LE3 erbringt die Funktion einer Netzzugangseinheit für die Verbindungsanforderung CR2 und filtert so beispielsweise in die Verbindungsanforderung CR2 eingetragene Rufnummern des gerufenen Teilnehmers oder Ortsnetzbereichskennungen dieser Rufnummer als fehlerhaft aus, die eine von der Kennung des Ortsnetzbereiches AREA3 unterschiedliche Kennung enthalten. Auf diese Funktion könnte auch verzichtet werden oder diese Funktion könnte auch in der Dienstvermittlungsstelle SSP1 angesiedelt sein.

Eine so veränderte Verbindungsanforderung CR3 wird durch das öffentliche Kommunikationsnetz PUBNET zu der Dienstvermittlungsstelle SSP1 geleitet, die die in der Verbindungsanforderung CR3 eingetragene Dienstekennung erkennt und eine Diensteinheit des öffentlichen Kommunikationsnetzes, nämlich die Dienststeuereinheit SCP, mittels Senden einer Dienstanforderungsnachricht SR für die Verbindungsanforderung CR3 triggert. Die Dienststeuereinheit SCP ermittelt die dem rufenden Teilnehmer zugeordnete Ortsnetzbereichskennung und stellt mittels einer Steuernachricht SC den Eintrag dieser Kennung als Ortsnetzbereichskennung des rufenden Teilnehmers in die Verbindungsanforderung sicher. Eine so veränderte Verbindungsanforderung wird nun über die Teilnehmervermittlungsstelle LE2 an das Endgerät TEB geleitet und die Verbindung zwischen den Endgeräten TEA und TEB wird aufgebaut. Es ist hierbei auch möglich, daß die Dienstekennung nicht von der Nebenstellenvermittlung PABX1 sondern von der Nebenstellenvermittlung PABX3 in die Verbindungsanforderung eingefügt wird, wenn diese erkennt, daß der dieser Verbindungsanforderung zugeordnete rufende Teilnehmer einem anderen Ortsnetzbereich zugeordnet ist als der Netzübergang G5.

Es ist auch möglich, daß die Teilnehmervermittlungsstelle LE1 bereits selbst eine Dienstvermittlungsstelle darstellt, wobei es auch möglich ist, daß die Dienststeuereinheit SCP in die Steuerung dieser Vermittlungsstelle integriert ist.

Es ist weiter möglich, daß von der Nebenstellenvermittlung PABX1 keine Dienstekennung in die Verbindungsanforderung eingefügt wird. Die Dienststeuereinheit SCP kann in diesem Fall von einer Netzzugangseinheit des öffentlichen Kommunikationsnetzes PUBNET getriggert werden, die beispielsweise von der Teilnehmervermittlungsstelle LE1 oder von der Dienstvermittlungsstelle SSP1 bereitgestellt wird. Ein solches Triggern kann durch das Einfügen einer Dienstekennung in die Verbindungsanforderung CR2 oder durch das direkte Senden einer Nachricht an die Dienststeuereinheit SCP erfolgen. Die Netzzugangseinheit löst hierbei einen solchen Trigger aus, wenn sie eine aus dem privaten Kommunikationsnetz stammende Verbindungsanforderung erkennt, bei der der Ortsnetzbereich des rufenden Teilnehmers nicht dem Ortsnetzbereich entspricht, dem die Netzzugangseinheit zugeordnet ist.

Anhand der Fig. 3a bis 3c werden nun weitere Ausführungsformen der Erfindung verdeutlicht.

Fig. 3a zeigt die Nebenstellenvermittlung PABX3, die Dienstvermittlungsstelle SSP1, die Dienststeuereinheit SCP und die Teilnehmervermittlungsstelle LE2.

In diesem Ausführungsbeispiel erbringt die Dienstvermittlungsstelle SSP1 die Funktion einer Netzzugangseinheit. Im privaten Kommunikationsnetz PRNET wird in die Verbindungsanforderung die Rufnummer des gerufenen Teilnehmers und zusätzlich die dem gerufenen Teilnehmer zugeordneten Ortsnetzbereichskennung eingetragen, wenn die Verbindungsanforderungen in einem Ortsnetzbereich in das öffentliche Kommunikationsnetz geleitet wird, der nicht dem dem rufenden Teilnehmer zugeordneten Ortsnetzbereich entspricht. Anschließend wird die Verbindungsanforderung als Verbindungsanforderung CR2' in das öffentliche Kommunikationsnetz PUBNET geleitet. Der Eintrag der Ortsnetzbereichskennung erfolgt hierbei vorteilhafterweise durch die Nebenstellenvermittlung PABX1. Wird nun die Dienststeuereinheit SCP wie oben beschrieben für eine Verbindungsanforderung getriggert, so ermittelt die Dienststeuereinheit SCP die Ortsnetzbereichskennung aus der Verbindungsanforderung CR2' und trägt die in der Verbindungsanforderung enthaltene Ortsnetzbereichskennung des rufenden Teilnehmers an die dafür vorgesehene Stelle in der Verbindungsanforderung ein. Eine andere Möglichkeit besteht darin, daß die Ortsnetzbereichskennung von der Nebenstellenvermittlung PABX1 bereits an die dafür vorgesehene Stelle eingetragen wird und daß die Dienststeuereinheit SCP die von der Netzzugangseinheit vorgenommene Abänderung der Ortsnetzbereichskennung des rufenden Teilnehmers wieder rückgängig macht.

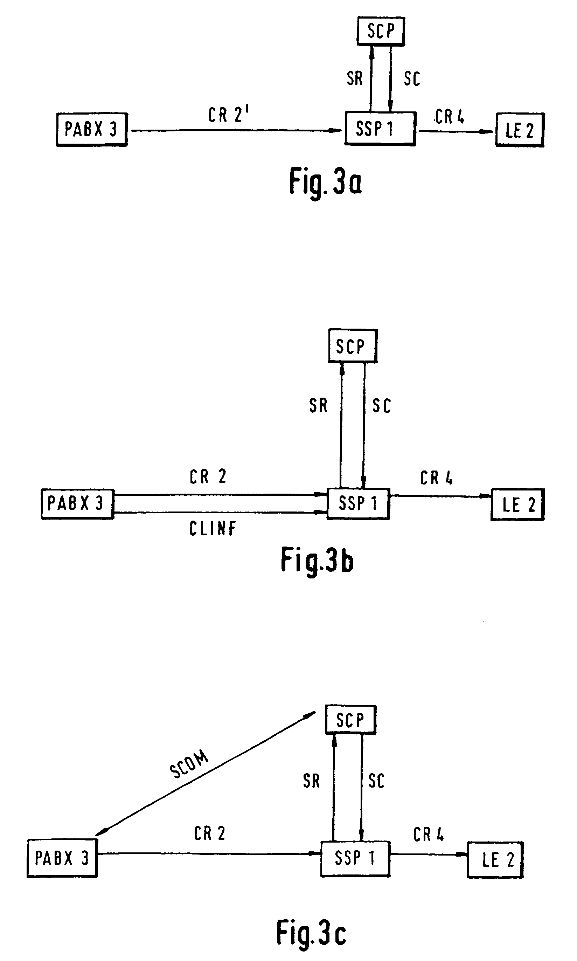

Fig. 3b zeigt die Nebenstellenvermittlung PABX3, die Dienstvermittlungsstelle SSP1, die Dienststeuereinheit SCP und die Teilnehmervermittlungsstelle LE2.

Im privaten Kommunikationsnetz PRNET wird in die Verbindungsanforderung die interne Rufnummer des rufenden Teilnehmers eingetragen und als Verbindungsanforderung CR2 in das öffentliche Kommunikationsnetz PUBNET geleitet. Zusätzlich dazu wird die dem rufenden Teilnehmer zugeordnete Ortsnetzbereichskennung in einer Signalisierungsnachricht CLINF zusätzlich zu der Verbindungsanforderung CR2 von der Nebenstellenvermittlung PABX1 oder PABX3 in das öffentliches Kommunikationsnetz PUBNET gesendet, wenn die Verbindungsanforderung CR2 in einem Ortsnetzbereich in das öffentliche Kommunikationsnetz PUBNET geleitet wird, der nicht dem dem rufenden Teilnehmer zugeordneten Ortsnetzbereich entspricht. Die Signalisierungsnachricht CLINF wird von der, wie oben beschrieben für die Verbindungsanforderung CR2 getriggerten Dienststeuereinheit SCP dazu verwendet, den Ortsnetzbereich des rufenden Teilnehmers zu ermitteln. Anschließen trägt die Dienststeuereinheit SCP die diese Ortsnetzbereichskennung des rufenden Teilnehmers an die dafür vorgesehene Stelle in die Verbindungsanforderung ein.

Fig. 3c zeigt die Nebenstellenvermittlung PABX3, die Dienstvermittlungsstelle SSP1, die Dienststeuereinheit SCP und die Teilnehmervermittlungsstelle LE2.

Wird die Dienststeuereinheit SCP wie oben beschrieben für die Verbindungsanforderung CR2 getriggert, so kontaktiert sie zur Ermittlung der dem rufenden Teilnehmer zugeordneten Ortsnetzbereichskennung eine Diensteinheit des privaten Kommunikationsnetzes PRNET. Eine solche Diensteinheit kann beispielsweise ein Programm-Modul sein, das auf der Steuerung der Nebenstellenvermittlung PABX3 oder PABX1 ablauft. Der Austausch von Nachrichten SCOM mit dieser Diensteinheit erfolgt hierbei vorzugsweise über das Signalisierungsnetz. Diese Diensteinheit ermittelt nun auf Anforderung der Dienststeuereinheit SCP die Ortsnetzbereichskennung des rufenden Teilnehmers der Verbindungsanforderung CR2 und sendet diese Daten an die Dienststeuereinheit SCP zurück, die sodann die so ermittelte Ortsnetzbereichskennung an die dafür vorgesehene Stelle in der Verbindungsanforderung einträgt.

## Patentansprüche

1. Verfahren zur Bereitstellung der Rufnummer des rufenden Teilnehmers (A) in Verbindungsanforderungen, die von einem privaten Kommunikationsnetzes (PRNET) in ein öffentliches Kommunikationsnetz (PUBNET) geleitet werden,
**dadurch gekennzeichnet, daß** eine Diensteinheit (SCP) des öffentlichen Kommunikationsnetzes (PUBNET) für eine von dem privaten Kommunikationsnetz (PRNET) in das öffentliche Kommunikationsnetz geleiteten Verbindungsanforderung getriggert wird, wenn die Verbindungsanforderung in einem Ortsnetzbereich (AREA1 bis AREA3) von dem privaten Kommunikationsnetzes (PRNET) in das öffentliche Kommunikationsnetz (PUBNET) geleitet wird, der nicht dem dem rufenden Teilnehmer (A) der Verbindungsanforderung zugeordneten Ortsnetzbereich (AREA1) entspricht, und daß die Diensteinheit (SCP), wenn sie für eine solche Verbindungsanforderung getriggert ist, die dem rufenden Teilnehmer (A) der Verbindungsanforderung zugeordnete Ortsnetzbereichskennung ermittelt und den Eintrag dieser Kennung als Ortsnetzbereichskennung des rufenden Teilnehmers in die Verbindungsanforderung sicherstellt.

2. Verfahren nach Anspruch 1, **dadurch gekennzeichnet, daß** im privaten Kommunikationsnetz (PRNET) eine Dienstekennung in eine Verbindungsanforderung eingefügt wird, wenn die Verbindungsanforderungen in einem Ortsnetzbereich (AREA1 bis AREA3) in das öffentliche Kommunikationsnetz (PUBNET) geleitet wird, der nicht dem dem rufenden Teilnehmer (A) der Verbindungsanforderung zugeordneten Ortsnetzbereich (AREA1) entspricht, und daß die Diensteinheit (SCP) des öffentlichen Kommunikationsnetzes durch diese Dienstekennung für die Verbindungsanforderung getriggert wird.

3. Verfahren nach Anspruch 1, **dadurch gekennzeichnet, daß** die Diensteinheit (SCP) des öffentlichen Kommunikationsnetzes von einer Netzzugangseinheit (LE1) des öffentlichen Kommunikationsnetzes, die einen Netzzugang vom privaten Kommunikationsnetz in das öffentliche Kommunikationsnetz bereitstellt, für eine Verbindung getriggert wird, wenn die Netzzugangseinheit (LE1) eine aus dem privaten Kommunikationsnetz stammende Verbindungsanforderung erkennt, bei der der Ortsnetzbereich (AREA1) des rufenden Teilnehmers (A) der Verbindungsanforderung nicht dem Ortsnetzbereich (AREA3) entspricht, dem die Netzzugangseinheit (LE1) zugeordnet ist.

4. Verfahren nach Anspruch 1, **dadurch gekennzeichnet, daß** im privaten Kommunikationsnetz (PRNET) die dem rufenden Teilnehmer (A) zugeordnete Ortsnetzbereichskennung (AREA1) in eine Verbindungsanforderung eingetragen wird, wenn die Verbindungsanforderungen in einem Ortsnetzbereich (AREA1 bis AREA3) in das öffentliche Kommunikationsnetz geleitet wird, der nicht dem dem rufenden Teilnehmer (A) der Verbindungsanforderung zugeordneten Ortsnetzbereich (AREA1) entspricht, und daß dieser Eintrag der Diensteinheit (SCP) des öffentlichen Kommunikationsnetzes zur Ermittlung der dem rufenden Teilnehmer zugeordnete Ortsnetzbereichskennung dient.

5. Verfahren nach Anspruch 1, **dadurch gekennzeichnet, daß** im privaten Kommunikationsnetz (PRNET) die dem rufenden Teilnehmer einer Verbindungsanforderung zugeordnete Ortsnetzbereichskennung zusätzlich zu der Verbindungsanforderung (CR2) in das öffentliches Kommunikationsnetz (PUBNET) gesendet wird, wenn die Verbindungsanforderungen in einem Ortsnetzbereich (AREA1 bis AREA3) in das öffentliche Kommunikationsnetz geleitet wird, der nicht dem dem rufenden Teilnehmer (A) der Verbindungsanforderung zugeordneten Ortsnetzbereich (AREA1) entspricht.

6. Verfahren nach Anspruch 1, **dadurch gekennzeichnet, daß** die Diensteinheit (SCP) des öffentlichen Kommunikationsnetzes zur Ermittlung der dem rufenden Teilnehmer (A) der Verbindungsanforderung zugeordnete Ortsnetzbereichskennung eine Diensteinheit des privaten Kommunikationsnetzes kontaktiert.

7. Verfahren nach Anspruch 1, **dadurch gekennzeichnet, daß** das private Kommunikationsnetz (PRNET) über mehrere, in verschiedenen Ortsnetzbereichen (AREA1 bis AREA3) angesiedelte Netzübergänge (G1 bis G5) mit dem öffentlichen Kommunikationsnetz (PUBNET) verbunden ist und eine Steuereinheit des privaten Kommunikationsnetzes für eine Verbindung in das öffentliche Kommunikationsnetze jeweils denjenigen Netzübergang auswählt, über den für die jeweilige Verbindung die geringsten Verbindungsgebühren anfallen.

8. Verfahren nach Anspruch 1, **dadurch gekennzeichnet, daß** das private Kommunikationsnetz von einem virtuellen privaten Kommunikotionsnetz gebildet wird, das mehreren über Verbindungen des öffentlichen Netzes miteinander verbundenen Teilnetze umfaßt.

9. Diensteinheit (SCP) zur Unterstützung der Bereitstellung der Rufnummer des rufenden Teilnehmers (A) in Verbindungsanforderungen, die von einem privaten Kommunikationsnetzes (PRNET) in ein öffentliches Kommunikationsnetz (PUBNET) geleitet werden ,
**dadurch gekennzeichnet, daß** die Diensteinheit (SCP) so ausgestaltet ist, daß sie, wenn sie für eine Verbindungsanforderung getriggert wird, die von dem privaten Kommunikationsnetz (PRNET) in einem Ortsnetzbereich (AREA1 bis AREA3) in das öffentliche Kommunikationsnetz (PUBNET) geleitet wird, der nicht dem dem rufenden Teilnehmer (A) der Verbindungsanforderung zugeordneten Ortsnetzbereich (AREA1) entspricht, die dem rufenden Teilnehmer (A) der Verbindungsanforderung zugeordnete Ortsnetzbereichskennung ermittelt und den Eintrag dieser Kennung als Ortsnetzbereichskennung des rufenden Teilnehmers in die Verbindungsonforderung sicherstellt.

## Claims

1. A method for providing the number of the calling party (A) in connection requests which are routed from a private communication network (PRNET) into a public communication network (PUBNET),
**characterized in that** a service unit (SCP) of the public communication network (PUBNET) is triggered for a connection request routed from the private communication network (PRNET) into the public communication network, if the connection request is routed from the private communication network (PRNET) into the public communication network (PUBNET) in a local network area (AREA1 to AREA3) that is not the local network area (AREA1) assigned to the calling party (A) of the connection request, and that the service unit (SCP), when it is triggered for such a connection request, determines the local network area code assigned to the calling party (A) of the connection request and ensures that this code is entered in the connection request as the local network area code of the calling party.

2. A method according to Claim 1, **characterized in that** in the private communication network (PRNET) a service code is inserted in a connection request if the connection request is routed into the public communication network (PUBNET) in a local network area (AREA1 to AREA3) that is not the local network area (AREA1) assigned to the calling party (A) of the connection request, and that the service unit (SCP) of the public communication network is triggered by this service code for the connection request.

3. A method according to Claim 1, **characterized in that** the service unit (SCP) of the public communication network is triggered for a connection by a public communication network access unit (LE1) that provides a network access from the private communication network into the public communication network, if the network access unit (LE1) detects a connection request coming from the private communication network, in which request the local network area (AREA1) of the calling party (A) in the connection request is not the local network area (AREA3) to which the network access unit (LE1) is assigned.

4. A method according to Claim 1, **characterized in that** in the private communication network (PRNET) the local network area code (AREA1) assigned to the calling party (A) is entered in a connection request if the connection request is routed into the public communication network in a local network area (AREA1 to AREA3) that is not the local network area (AREA1) assigned to the calling party (A) of the connection request, and that this entry of the service unit (SCP) of the public communication network is used for determining the local network area code assigned to the calling party.

5. A method according to Claim 1, **characterized in that** in the private communication network (PRNET) the local network area code assigned to the calling party in a connection request is sent to the public communication network (PUBNET) in addition to the connection request (CR2), if the connection request is routed into the public communication network in a local network area (AREA1 to AREA3) that is not the local network area (AREA1) assigned to the calling party (A) of the connection request.

6. A method according to Claim 1, **characterized in that** the service unit (SCP) of the public communication network contacts a service unit of the private communication network in order to determine the local network area code assigned to the calling party (A) of the connection request.

7. A method according to Claim 1, **characterized in that** the private communication network (PRNET) is connected to the public communication network (PUBNET) over several gateways (G1 to G5) located in different local network areas (AREA1 to AREA3), and for a connection into the public communication network a control unit of the private communication network selects in each case the gateway with which the lowest call charges arise for the particular connection.

8. A method according to Claim 1, **characterized in that** the private communication network is formed from a virtual private communication network, which comprises several subnetworks linked together over connections of the public network.

9. A service unit (SCP) for supporting the provision of the number of the calling party (A) in connection requests which are routed from a private communication network (PRNET) into a public communication network (PUBNET),
**characterized in that** the service unit (SCP) is designed in such a way that, if it is triggered for a connection request that is routed from the private communication network (PRNET) into the public communication network (PUBNET) in a local network area (AREA1 to AREA3) that is not the local network area (AREA1) assigned to the calling party (A) in the connection request, it determines the local network area code assigned to the calling party (A) in the connection request and ensures that this code is entered in the connection request as the local network area code of the calling party.

## Revendications

1. Procédé pour l'activation du numéro d'appel de l'abonné appelant (A) dans des demandes de communication qui sont acheminées d'un réseau de communication privé (PRNET) vers un réseau de communication public (PUBNET),
**caractérisé en ce qu'**une unité de service (SCP) du réseau de communication public (PUBNET) est déclenchée pour une demande de communication acheminée du réseau de communication privé (PRNET) vers le réseau de communication public lorsque la demande de communication est acheminée du réseau de communication privé (PRNET) vers le réseau de communication public (PUBNET) dans une zone de réseau régional (AREA 1 à AREA 3) qui ne correspond pas à la zone de réseau régional (AREA 1) attribuée à l'abonné appelant (A) de la demande de communication et **en ce que** l'unité de service (SCP), lorsqu'elle est déclenchée pour une telle demande de communication, détermine l'indicatif de la zone de réseau régional attribué à l'abonné appelant (A) de la demande de communication et assure l'inscription de cet indicatif comme indicatif de la zone de réseau régional de l'abonné appelant dans la demande de communication.

2. Procédé selon la revendication 1, **caractérisé en ce qu'**un indicatif de service est ajouté dans une demande de communication dans le réseau de communication privé (PRNET) lorsque la demande de communication est acheminée vers le réseau de communication public (PUBNET) dans une zone de réseau régional (AREA 1 à AREA 3) qui ne correspond pas à la zone de réseau régional (AREA 1) attribuée à l'abonné appelant (A) de la demande de communication et **en ce que** l'unité de service (SCP) du réseau de communication public est déclenchée par cet indicatif de service pour la demande de communication.

3. Procédé selon la revendication 1, **caractérisé en ce que** l'unité de service (SCP) du réseau de communication public est déclenchée pour une communication par une unité d'accès au réseau (LE1) du réseau de communication public qui active un accès au réseau du réseau de communication privé au réseau de communication public lorsque l'unité d'accès au réseau (LE1) détecte une demande de communication provenant du réseau de communication privé dans laquelle la zone de réseau régional (AREA 1) de l'abonné appelant (A) de la demande de communication ne correspond pas à la zone de réseau régional (AREA 3) à laquelle est attribuée l'unité d'accès au réseau (LE1).

4. Procédé selon la revendication 1, **caractérisé en ce que**, dans le réseau de communication privé (PRNET), la zone de réseau régional (AREA 1) attribuée à l'abonné appelant (A) est inscrite dans une demande de communication lorsque la demande de communication est acheminée vers le réseau de communication public (PUBNET) dans une zone de réseau régional (AREA 1 à AREA 3) qui ne correspond pas à la zone de réseau régional (AREA 1) attribuée à l'abonné appelant (A) de la demande de communication et **en ce que** cette inscription sert à l'unité de service (SCP) du réseau de communication public pour déterminer l'indicatif de la zone de réseau régional attribué à l'abonné appelant.

5. Procédé selon la revendication 1, **caractérisé en ce que**, dans le réseau de communication privé (PRNET), l'indicatif de la zone de réseau régional attribué à l'abonné appelant d'une demande de communication est envoyé en plus de la demande de communication (CR2) vers le réseau de communication public (PUBNET) lorsque la demande de communication est acheminée vers le réseau de communication public dans une zone de réseau régional (AREA 1 à AREA 3) qui ne correspond pas à la zone de réseau régional (AREA 1) attribuée à l'abonné appelant (A) de la demande de communication.

6. Procédé selon la revendication 1, **caractérisé en ce que** l'unité de service (SCP) du réseau de communication public contacte une unité de service du réseau de communication privé pour déterminer l'indicatif de la zone de réseau régional attribué à l'abonné appelant (A) de la demande de communication.

7. Procédé selon la revendication 1, **caractérisé en ce que** le réseau de communication privé (PRNET) est relié au réseau de communication public (PUBNET) par plusieurs passerelles (G1 à G5) établies dans différentes zones de réseau régional (AREA 1 à AREA 3) et **en ce que**, pour une liaison avec le réseau de communication public, une unité de commande du réseau de communication privé sélectionne la passerelle respective par l'intermédiaire de laquelle on obtient les tarifs de communication les plus faibles pour la communication.

8. Procédé selon la revendication 1, **caractérisé en ce que** le réseau de communication privé est formé par un réseau de communication privé virtuel qui comprend plusieurs sous-réseaux reliés les uns aux autres par des liaisons du réseau public.

9. Unité de service (SCP) pour l'assistance de l'activation du numéro d'appel de l'abonné appelant (A) dans des demandes de communication qui sont acheminées par un réseau de communication privé (PRNET) vers un réseau de communication public (PUBNET),
**caractérisée en ce que** l'unité de service (SCP) est conçue de telle manière que, lorsqu'elle est déclenchée pour une demande de communication qui est acheminée du réseau de communication privé (PRNET) vers le réseau de communication public (PUBNET) dans une zone de réseau régional (AREA 1 à AREA 3) qui ne correspond pas à la zone de réseau régional (AREA 1) attribuée à l'abonné appelant (A) de la demande de communication, elle détermine l'indicatif de la zone de réseau régional attribué à l'abonné appelant (A) de la demande de communication et assure l'inscription de cet indicatif comme indicatif de la zone de réseau régional de l'abonné appelant dans la demande de communication.
